(19) Europäisches Patentamt
European Patent Office
Office européen des brevets

(11) Publication number : **0 305 379 B1**

(12) # EUROPEAN PATENT SPECIFICATION

(45) Date of publication of patent specification :
**02.01.92 Bulletin 92/01**

(51) Int. Cl.[5] : **F16K 17/04**

(21) Application number : **87902825.6**

(22) Date of filing : **14.04.87**

(86) International application number :
**PCT/SE87/00187**

(87) International publication number :
**WO 87/06319 22.10.87 Gazette 87/23**

(54) **SAFETY VALVE.**

(30) Priority : **18.04.86 SE 8601769**

(43) Date of publication of application :
**08.03.89 Bulletin 89/10**

(45) Publication of the grant of the patent :
**02.01.92 Bulletin 92/01**

(84) Designated Contracting States :
**AT BE CH DE FR GB IT LI LU NL SE**

(56) References cited :
**SE-B- 331 797**

(73) Proprietor : **Kidner, Kjell**
**Krökslätts Parkgata 47**
**S-431 38 Mölndal (SE)**

(72) Inventor : **KIDNER, Kjell**
**Krokslätts Parkgata 47**
**S-431 38 Mölndal (SE)**

(74) Representative : **Tiedtke, Harro, Dipl.-Ing. et al**
**Patentanwälte Tiedtke-Bühling- Kinne &**
**Partner Bavariaring 4 POB 20 24 03**
**W-8000 München 2 (DE)**

EP 0 305 379 B1

## Description

The present invention relates to a safety valve for fluid comprising an inlet and an outlet for the fluid in question and a passage running between the inlet and the outlet.

The principal object of the present invention is to make available a safety valve of the kind indicated above which has a reliable automatic function and consists of a small number of simple parts.

Said purpose is achieved by means of a safety valve in accordance with the present invention having the features as defined in claim 1.

The invention is described below in relation to a number of preferred embodiments, in conjunction with which reference is made to the drawings, in which

Fig. 1 shows a first illustrative embodiment of a safety valve in accordance with the present invention;

Fig. 2 shows a second illustrative embodiment of a safety valve in accordance with the present invention; and

Fig. 3 shows a third illustrative embodiment of a safety valve in accordance with the present invention.

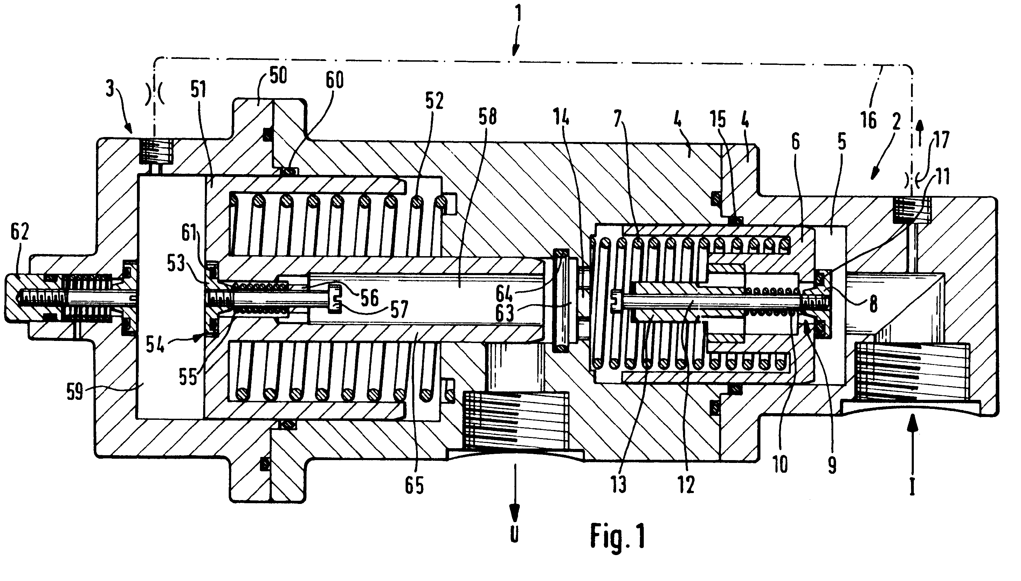

A safety valve 1 as shown in Fig. 1 comprises a control valve 2 for the pressurized flow and a shut-off valve 3 and is so arranged as to function for fluid of an appropriate kind, and thus for all liquids and gases.

The control valve 2, which, in the example shown here, is combined with the shut-off valve 3, although these can also be arranged separately from one another, comprises a cylindrical body 4 with a cavity 5 in which a control piston 6 is accommodated in such a way that it is free to move and is actuated by a spring 7 so as to be compelled to move in a direction towards a fluid inlet I which, for example, leads from an incoming water supply line. A disc valve 8 or some other appropriate piston valve is so arranged as to interact with a passage 9 running through the control piston 6 and is actuated by a spring 10 in order to open said passage 9. A sealing element 11 is so arranged as to act in said passage 9 between the control piston 6 and the piston valve 8. Said piston valve 8 is attached to a rod 12 which can be controlled by a guide 13 attached to the control piston 6. The rod 12 is so arranged as to be capable of interacting with a seat 14. The piston 6 can be sealed by means of a seal 15.

A supply line 16 is connected to the inlet I and extends as far as said shut-off valve 3 and can be provided with a throttle valve (constriction) 17.

The shut-off valve 3, which can be constructed largely from similar components to those exhibited by the control valve 2, can consist of a moving shut-off piston 51 accommodated in a cylindrical body 50 for the piston, which shut-off piston is actuated by a spring 52 so as to be displaced in a direction away from an outlet U. A further piston valve 53, for example of the disc valve type, is so arranged as to close a passage 54 running through the shut-off piston 51. Said piston valve 53 is actuated by a spring 55 so as to open said passage 54 and is attached to a rod 57 controlled by a guide 56.

A cavity 58 may be arranged internally in the piston 51, which cavity may be separate from the cavity 59. A seal 60 is arranged between the piston 51 and the body 50, and a sealing element 61 is so arranged as to seal the passage 54 between the piston 51 and the valve 53.

An opening or venting valve 62 is arranged on the shut-off valve 3.

Arranged between the shut-off valve 3 and the control valve 2 is a passage 63 which permits communication between the inlet I and the outlet U. A seal 64 is so arranged as to seal along said passage 63 against a sleeve-like section 65 of the piston projecting from the piston 51.

The sealing elements 61, 11, 60, 15 and 64 may consist of 'O'-rings or other appropriate sealing elements.

The operating function is as follows, with reference to Fig. 1, which shows a first illustrative embodiment.

In its resting and starting position the piston 6 is displaced to the right by the spring force of the spring 7, so that the disc valve 8 engages with the bottom of the cylindrical body 4. The disc valve 8 then seals against the sealing element 11, for example.

The piston 51 is displaced to the left, and the piston valve 53 is pressed against the opening valve 62. The valve 53 is now sealed over the sealing element 61. The force is generated by the spring 52.

The safety valve 1 is now in its resting position.

The safety valve 1 may, for example, be connected to the incoming water supply line to a building, so that the incoming water or some other fluid, for which said valve 1 is designed to be used, can be led in via the inlet I of the valve 1, allowed to pass through the valve 1, and extracted via the outlet U in order to be fed to the intended point of consumption, for example taps, to which said example relates.

The following will occur if a tap is opened on the outlet side U: the pressure on the outlet side U will drop. The pressure on the inlet side I overcomes the spring force of the spring 7. The difference in pressure between the inlet I and the outlet U is greater than the spring force of the spring 10. The seal 11 maintains its sealing effect. The piston 6 is displaced to the left until the rod 12 contacts the seat 14, when the disc valve 8 opens up in relation to the piston 6 a gap 9 between the valve 8 and the piston 6. The opening of the gap is directly proportional to the spring force of the spring 7 and the spring 10, which in turn is proportional to the outgoing flow at the outlet U.

When a flow passes from the inlet I to the outlet U, a drop in pressure occurs across the control valve 2. The same drop in pressure occurs across the shut-down cylinder through the channel 16, which connects the inlet I to the side of the piston on the shut-down cylinder 50.

The channel 16 can be choked by means of the nozzle, which has a small hole, and in this way flow control to the shut-down cylinder is achieved.

Once a drop in pressure has occurred across the piston 51 and the valve 8, where the drop in pressure is greater than the force of the spring 55, the valve 53 remains tightly over the seal 61. The piston 51 then begins to move to the right, and the piston 51 continues to move until it comes into contact with the seal 64.

Once the piston 51 comes into contact with the seal 64, the connection between the inlet I via the gap 9 between the piston 6 and the disc valve 8 to the outlet U is interrupted. The flow through the piston 6 ceases, and the spring force 7 becomes predominant and pushes the piston 6 to the right. The spring force of the spring 10 now opens the valve 8, as there is no longer a pressure difference across the valve 8.

The piston 6 moves to the right until the valve 8 reaches the bottom of the cylindrical body 4.

The piston 6 is thus back in its initial position.

The piston 51, which is now in contact with the seal 64, exhibits the same pressure inside the space 58 as on the inlet side I, and as a consequence via the channel 16, the same pressure on the left-hand side of the piston 51. This means that the spring force of the spring 55 opens the valve 53, and the piston 51 moves to the right down as far as its bottom position, where it remains.

Because of the difference in size achieved between the seal 61 and the seal 64, and because of the lower pressure on the outlet side U, the force on the left-hand side of the piston 51 is higher than the spring force of the spring 52. As the pressure continues to fall in the outlet U, the force across the seal 64 rises and the piston 51 remains in its right-hand bottom position.

If it is wished to return the piston 51 to its left-hand position, the valve 62 is opened so that the pressure on the left-hand side of the piston 51 disappears or becomes less than the spring force of the spring 52, and the piston 51 is displaced to the left by the spring 52.

The cycle is now repeated.

The piston 51 begins to be displaced to the right. If the outlet side U is closed, for example by means of a tap, so that the flow from I through the gap 9 between the disc valve 11 and the piston 6 ceases, then the pressure drop across the piston 6 will also cease, and the piston 6 will move to the right with the valve 8 open due to the spring force of the spring 10. The disc valve 8 remains open until it makes contact with the bottom of the cylindrical body 4, when the valve 8 closes against the seal 11.

The pressure on the left-hand side of the piston 6 is now the same as the pressure at the inlet I and consequently also in the space 58, in which case the pressure at the outlet U will open the valve 53 due to the spring force of the spring 55.

The piston 51 returns due to the effect of the spring 52. The piston 51 moves to the left, and the valve 53, which is open, moves towards the valve 62 and closes via the seal 61.

The safety valve 1 is now in the starting position for a new cycle.

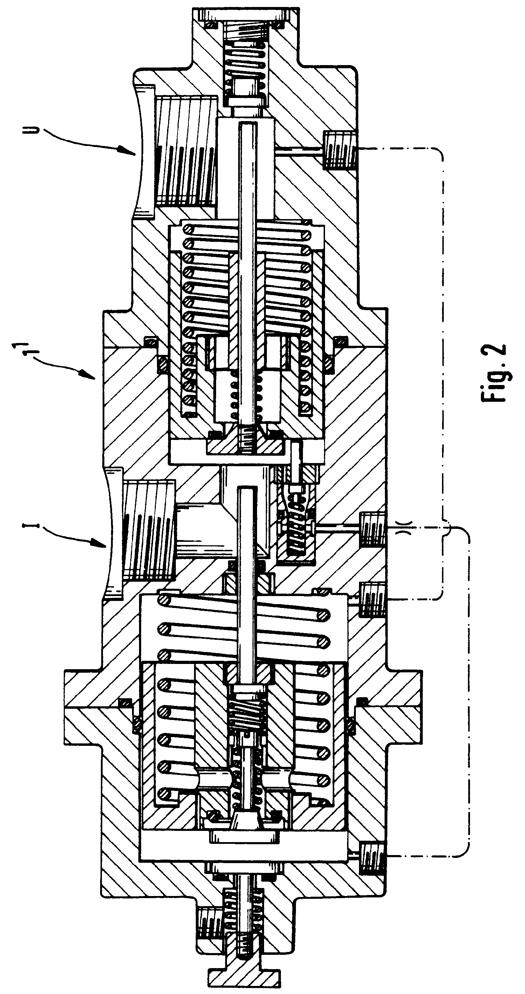

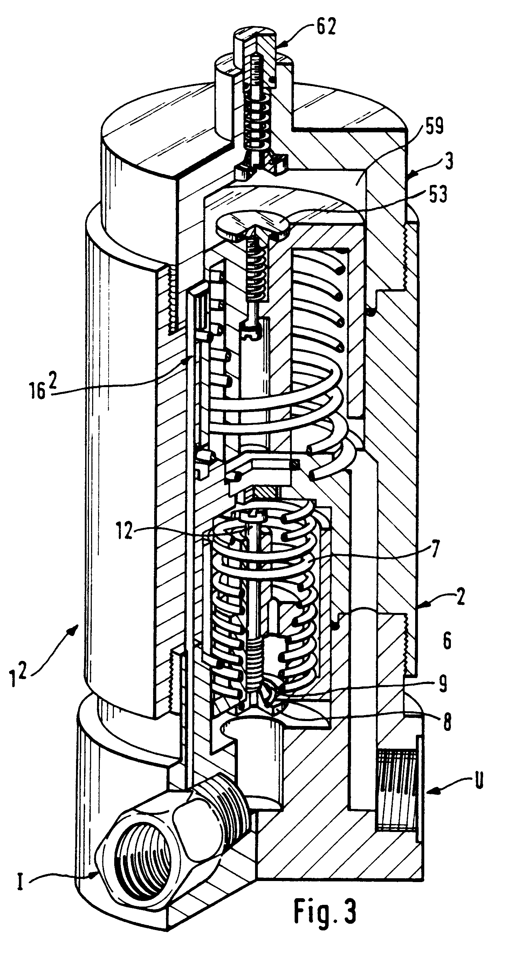

Fig. 2 shows a variant of a safety valve 1[1] with similar elements to those exhibited by the previously described illustrative embodiment, and Fig. 3 similarly shows a further variant of a safety valve 1[2], although the latter also exhibits an internal channel 16[2].

The operating function of the piston valve on the inlet side is unique, since it functions as a pressure-reducing valve as soon as a flow passes through it.

Example: The piston 6 is in the right-hand starting position with the valve 8 closed. When a tap on the outlet side U is opened, a pressure difference is created between U and I. The piston 6 is pushed to the right, and the pressure drop is proportional to the spring force (in this case equivalent to 0.5 bar). The piston is pushed down so that the rod 12 of the valve 8 is forced against the seat 14 and is opened proportionally to the pressure drop across the piston 6. When the flow through the valve ceases, the spring 10 holds the valve 8 open, and the pressure difference between I and U ceases. The spring 7 then pushes the piston 6 up (to the right) until the valve 8 is closed again. We are now in the starting position and we have the same pressure on the inlet side I and on the outlet side U. This is the unique feature. As soon as a flow is present, large or small, a pressure drop occurs, and as soon as the flow ceases, there is no longer a pressure drop.

## Claims

1. A safety valve for hydraulic systems comprising a cylindrical body (4), an inlet (I) and an outlet (U) in which a control valve (2) is arranged having a control piston (6) which is guided in a cavity (5) of said body (4) and which is prestressed via a spring (7) in the direction towards the inlet (I), said control piston (6) being penetrated by a passage (9) provided with a piston valve (8) prestressed by means of an additional spring (10) in the opening direction and which can be closed by means of a pressure drop between said inlet (I) and said outlet (U), said piston valve (8) a push rod (12) which can be brought into contact with a stop (14) or faid body (4) against the prestress of said spring (7), when said control piston (6) is moved, so that said passage (9) is to open against the pressure in the inlet (I).

2. A safety valve in accordance with Claim 1, **characterized** in that the flow through the passage (9) is proportional to the outgoing flow through the outlet (U).

3. A safety valve in accordance with any of the preceding Claim, **characterized** in that the outlet (U) can be closed by a shut-off valve (3) having a moving shut-off piston (51) accomodated in the cylindrical body 4 and in communication with the inlet (J).

4. A safety valve according to claim 3, characterized in that the shut-off piston (51) is prestressed by a spring (52) in its opening direction said shut-off pistion (51) being penetrated by a passage (54,58) provided with a piston valve (53) prestressed in its opening direction, so that the shut-off piston (51) is moveable by the inlet pressure against the prestress of the spring (52) into its shut-off position.

5. Safety valve according to claim 3 or 4, characterized in that the pressure side of the shut-off piston (51) is provided with a venting-valve (62).

6. Safety valve according to anyone of claims 3 to 5, characterized in that the communication (16) between the shut-off valve (3) and the inlet (I) is provided with a constriction (17).

**Patentansprüche**

1. Ein Sicherheitsventil für Hydrauliksysteme, das einen zylindrischen Körper (4) mit einem Einlaß (I) sowie einem Auslaß (U) umfaßt, in welchem ein Regelventil (2) mit einem in einem Hohlraum (5) des genannten Körpers (4) geführten und mittels einer Feder (7) in Richtung zum Einlaß (I) hin vorgespannten Stellkolben (6) angeordnet ist, der erwähnte Stellkolben (6) von einer Durchtrittsöffnung (9) durchsetzt ist, welche mit einem durch eine weitere Feder (10) in der Öffnungsrichtung vorgespannten Kolbenventil (8) versehen ist und mittels eines Druckabfalls zwischen dem besagten Einlaß (I) sowie dem besagten Auslaß (U) geschlossen werden kann, wobei das erwähnte Kolbenventil (8) eine Stößelstange (12) besitzt, welche mit einem Anschlag (14) des genannten Körpers (4) gegen die Vorspannung der besagten Feder (7) in Berührung gebracht werden kann, wenn der erwähnte Stellkolben (6) bewegt wird, so daß die besagte Durchtrittsöffnung (9) entgegen dem Druck im Einlaß (I) zu öffnen ist.

2. Ein Sicherheitsventil nach Anspruch 1, dadurch gekennzeichnet, daß die Strömung durch die Durchtrittsöffnung (9) hindurch der durch den Auslaß (U) austretenden Strömung proportional ist.

3. Ein Sicherheitsventil nach einem der vorhergehenden Ansprüche, dadurch gekennzeichnet, daß der Auslaß (U) durch ein Absperrventil (3) mit einem beweglichen, in dem zylindrischen Körper (4) aufgenomme und und mit dem Einlaß (I) in Verbindung stehenden Absperrkolben (1) verschlossen werden kann.

4. Ein Sicherheitsventil nach Anspruch 3, dadurch gekennzeichnet, daß der Absperrkolben (51) durch eine Feder (52) in seiner Öffnungsrichtung vorgespannt ist sowie der genannte Absperrkolben von einem mit einem in seiner Öffnungsrichtung vorgespannten Kolbenventil (53) versehenen Durchgang (54, 58) durchsetzt ist, so daß der Absperrkolben (51) durch den Einlaßdruck entgegen der Vorspannung der Feder (52) in seine Absperrposition bewegbar ist.

5. Ein Sicherheitsventil nach Anspruch 3 oder 4, dadurch gekennzeichnet, daß die Druckseite des Absperrkolbens (51) mit einem Entlüftungsventil (62) versehen ist.

6. Ein Sicherheitsventil nach einem der Ansprüche 3 bis 5, dadurch gekennzeichnet, daß die Verbindung (16) zwischen dem Absperrventil (3) und dem Einlaß (I) mit einer Einschnürung (17) versehen ist.

**Revendications**

1. Soupape de sécurité pour systèmes hydrauliques, comprenant un corps cylindrique (4), une entrée (I) et une sortie (U) dans laquelle est disposée une soupape de commande (2) comprenant un piston de commande (6) guidé dans une cavité (5) dudit corps (4) et précontraint par l'intermédiaire d'un ressort (7), en direction de l'entrée (I), ledit piston de commande (6) étant traversé par un passage (9) pourvu d'une soupape à piston (8), précontrainte par l'intermédiaire d'un ressort additionnel (10), en direction de l'ouverture, et qui peut être fermée au moyen d'une chute de pression entre ladite entrée (I) et ladite sortie (U), ladite soupape à piston (8) comportant une tige de poussée (12) qui peut être mise en contact avec une butée (14) dudit corps (4), à l'encontre de la précontrainte dudit ressort (7), lorsque ledit piston de commande (6) est déplacé, de manière que ledit passage (9) s'ouvre à l'encontre de la pression dans l'entrée (I).

2. Soupape de sécurité selon la revendication 1, caractérisée en ce que l'écoulement passant dans le passage (9) est proportionnel au courant de sortie passant par la sortie (U).

3. Soupape de sécurité selon l'une quelconque des revendications précédentes, caractérisée en ce que la sortie (U) peut être fermée par une soupape de sectionnement (3) équipée d'un piston de sectionnement (51) mobile, logé dans le corps cylindrique (4) et placé en communication avec l'entrée (3).

4. Soupape de sécurité selon la revendication 3, caractérisée en ce que le piston de sectionnement (51) est précontraint, par un ressort (52), dans sa direction d'ouverture, ledit piston de sectionnement (51) étant traversé par un passage (54,58) pourvu d'une soupape à piston (53), précontrainte dans sa direction d'ouverture, de manière que le piston de sectionnement (51) soit déplaçable par la pression interne, contre la précontrainte du ressort (52), pour passer à sa position de sectionnement.

5. Soupape de sécurité selon la revendication 3 ou 4, caractérisée en ce que le côté pression du piston de sectionnement (51) est pourvu d'une soupape d'évent (62).

6. Soupape de sécurité selon l'une quelconque des revendications 3 à 5, caractérisée en ce que la communication (16) entre la soupape de sectionnement (3) et l'entrée (I) est pourvue d'une restriction (17).

Fig. 1

EP 0 305 379 B1

Fig. 2

EP 0 305 379 B1

Fig. 3